# EUROPEAN PATENT APPLICATION

(11) **EP 2 565 963 A1**
(43) Date of publication of application: **06.03.2013**
(21) Application number: 11184264.7
(22) Date of filing: 07.10.2011
(51) Int. Cl.: H01M 2/30, H01M 2/26, H01M 10/058, H01M 10/0525

(54) **Lithium battery core and shell structure**

(30) Priority: 02.09.2011 TW 100216461 U
(71) Applicant: Dijiya Energy Saving Technology Inc., Banqiao City Taipei County 22043 (TW)
(72) Inventor: Huang, Wen-Hung, 22043 New Taipei City (TW)
(74) Representative: Becker Kurig Straus

(57) **Abstract**

A lithium battery core and shell structure comprises a shell body, a first terminal component and a second terminal component are respectively connected above a cover plate of the shell body, an anode tab and a cathode tab are respectively connected below the cover plate of the shell body. The anode tab is electrically connected to the first terminal component; an end of the cathode tab is electrically connected to the second terminal component, while another end of the cathode tab is extended downward and bent to form a coupling portion; and an insulating element is disposed between the coupling portion and the anode tab, so as to prevent short circuit because of contact between the anode tab and the cathode tab.

## Description

### BACKGROUND OF THE INVENTION

### Field of Invention

The present invention relates to a lithium battery core and shell structure, and more particularly, to a structure that can save processing costs and prevent leakage of electrolyte solution, and terminals can be effectively fixed to ensure user safety.

### Related Art

An existing lithium battery core and shell structure mainly includes a shell body, besides electrolyte solution, anode plates, separators and cathode plates assembled by laminating or winding are also stored in the shell body. Each of the anode plates is respectively welded with an anode tab, and then welded to a bottom of an anode terminal post of the shell body; each of the cathode plates is respectively welded with a cathode tab, and then welded to a bottom of a cathode terminal post of the shell body. A screw thread is disposed respectively at a top of the anode terminal post and the cathode terminal post, so that after they are respectively screwed with a nut, a terminal can be respectively fixed to them.

However, the abovementioned lithium battery core and shell structure has the below problems when being used:

1. When the abovementioned lithium battery core and shell structure is installed on dynamic machines such as electromobiles, the electrolyte solution can be leaked easily and the terminals can get loose easily because of the vibration produced during a motion of an electromobile.

2. When the winding cored anode tab is welded to the bottom of the anode terminal post of the shell body; and the winding cored cathode tab is welded to the bottom of the cathode terminal post of the shell body; problems with electric conduction and poor heat dissipation can be easily caused because the quality of welding points is difficult to be controlled and they are usually point contacts.

3. Because the specifications, shapes and winding cores assembled by laminating or winding of the lithium battery core and shell are different, thus the disposed positions of the anode tab and the cathode tab are also different; different connection methods have to be used for different disposed positions; therefore, time for manpower operation is substantially increased and cost is also increased.

In view of the abovementioned problems, the drawbacks need to be improved, so that a lithium battery core and shell structure not only can prevent electrolyte solution leakage, but can also prevent the terminals from getting loose in order to ensure safety, and the electric conduction and heat dissipation can be stabilized, the costs for processing can also be reduced effectively. A lithium battery core and shell structure of the present invention is developed as a result of continuous R&D and accumulation of many years of experience.

### SUMMARY OF THE INVENTION

A main object of the present invention is to provide a lithium battery core and shell structure, it comprises a cover plate with an extended cathode tab disposed below, and can be applicable for shell bodies with large and small specifications and for various types of winding cores; so that processing can be speed up and manpower cost can be saved effectively.

A secondary object of the present invention is to provide a lithium battery core and shell structure, which after terminals are fixed, they can be effectively prevented from getting loose because of vibration, so that safety can be ensured.

Yet another object of the present invention is to provide a lithium battery core and shell structure which is structurally compact in order to effectively prevent electrolyte solution leakage.

Yet another object of the present invention is to provide a lithium battery core and shell structure which can allow an anode tab and a cathode tab to be respectively electrically connected to a terminal, with large contact areas; so that electric can be conducted and heat can be dissipated effectively.

In order to achieve the abovementioned objects, a lithium battery core and shell structure of the present invention comprises a shell body, a first terminal component, a second terminal component, an anode tab, a cathode tab and an insulating element. The shell body includes a bottom shell body with an opening disposed at a top end, and a cover plate for covering the top end of the bottom shell body in order to seal off the opening. The first terminal component and the second terminal component are respectively connected above the cover plate of the shell body. The anode tab is connected below the cover plate of the shell body; and the anode tab is electrically connected to the first terminal component. The cathode tab is electrically connected to the second terminal component, and an end of the cathode tab is connected below the cover plate of the shell body, while another end of the cathode tab is extended downward and bent to form a coupling portion. The insulating element is disposed between the coupling portion of the cathode tab and the anode tab.

When it is embodied, an insulating plastic board is disposed between the cover plate and the anode and cathode tabs. The insulating plastic board is shaped as a strip and includes a wide portion and a narrow portion. The wide portion is interposed between the cover plate and the cathode tab, while the narrow portion is interposed between the cover plate and the anode tab, a circumference edge of the anode tab is connected to the cover plate.

When it is embodied, the coupling portion of the cathode tab is extended below the anode tab.

When it is embodied, both the first terminal component and the second terminal component respectively include a fixing element, a fixing piece and an anti-slipping element. The fixing element includes a bottom portion and an upright portion extended upward from the bottom portion. Through at least one positioning element which goes through the cover plate, the bottom portion is connected to a terminal plate of either the anode tab or the cathode tab. The fixing piece is sleeved on the upright portion, an anti-slipping surface is disposed on a bottom of the fixing piece. The anti-slipping element is connected to the upright portion and is disposed above the fixing piece; at least a bottom surface of the anti-slipping element, or a top of the fixing piece, is formed as a rough surface.

When it is embodied, the anti-slipping surface disposed on the bottom of the fixing piece includes a plurality of downwardly inclined teeth which are on a same plane. The top of the fixing piece is formed as a rough surface, and the rough surface includes a plurality of upwardly inclined teeth which are on a same plane, distances between the upwardly inclined teeth are larger than those between the downwardly inclined teeth.

When it is embodied, the bottom surface of the anti-slipping element can also be formed as a rough surface, and the rough surface includes a plurality of inclined teeth which are on a same plane, distances between the inclined teeth are equal to those between the upwardly inclined teeth.

The present invention will become more fully understood by reference to the following detailed description thereof when read in conjunction with the attached drawings.

### BRIEF DESCRIPTION OF THE DRAWINGS

Fig. 1 is an exploded perspective view of a preferred embodiment of a lithium battery core and shell structure of the present invention;

Fig. 2 is a perspective view of an anti-slipping element of a lithium battery core and shell structure of the present invention;

Fig. 3 is a perspective view of a fixing piece of a lithium battery core and shell structure of the present invention;

Fig. 4 is a upward view of a cathode tab before being bent of a lithium battery core and shell structure of the present invention;

Fig. 5 is a cross-sectional view before assembled with a bottom shell body of a lithium battery core and shell structure of the present invention; and

Fig. 6 is a schematic view of a preferred embodiment of a lithium battery core and shell structure of the present invention being used.

### DETAILED DESCRIPTION OF THE INVENTION

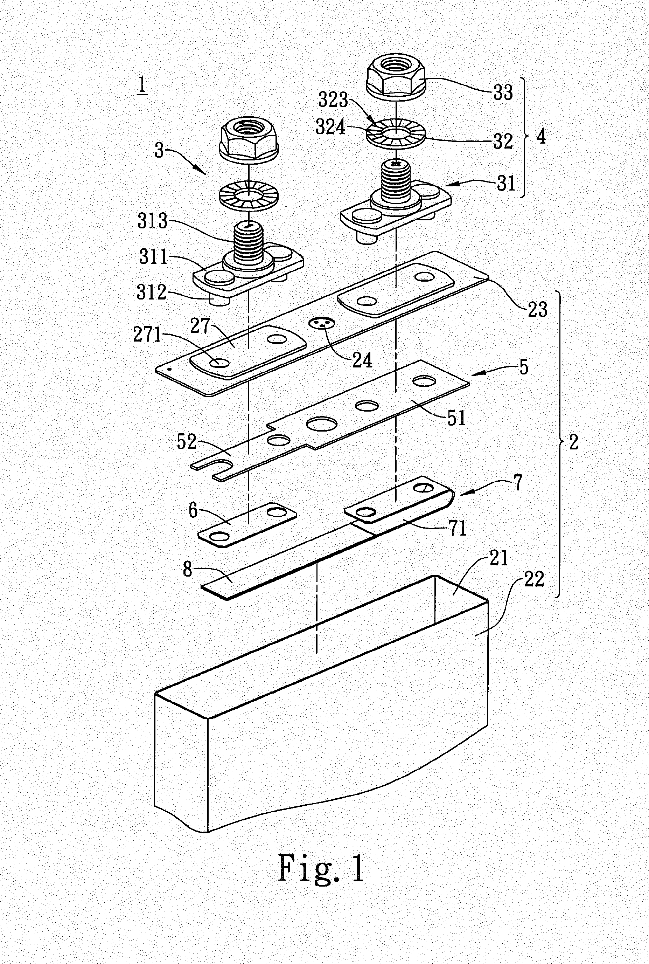

Referring to Figs. 1 to 3, a preferred embodiment of a lithium battery core and shell structure 1 of the present invention comprises a shell body 2, a first terminal component 3, a second terminal component 4, a plastic insulating board 5, an anode tab 6, a cathode tab 7 and an insulating element 8.

The shell body 2 is a hollow rectangular body, it includes a bottom shell body 22 with an opening 21 disposed at a top end, and a cover plate 23 for covering the top end of the bottom shell body 22 in order to seal off the opening 21. Anti-explosion holes 24 are disposed on a middle part of the cover plate 23, a plastic jacket 27 is respectively disposed on the cover plate 23 by each side of the anti-explosion holes 24, each of the plastic jackets 27 has two separated circular paths 271.

The first terminal component 3 and the second terminal component 4 are connected above the cover plate 23 of the shell body 2, both the first terminal component 3 and the second terminal component 4 respectively include a fixing element 31, a fixing piece 32 and an anti-slipping element 33. In this embodiment, the fixing element 31 is in an upside down T-shape, it includes a rectangular bottom portion 311, two separated rivets gone through the bottom portion 311, and a screw extended upward from a middle part of the bottom portion 311; the rivets are positioning elements 312, the screw is an upright portion 313.

The fixing piece 32 is a ring-shaped gasket being ringed on the upright portion 313. An anti-slipping surface 321 is disposed on a bottom of the fixing piece 32; the anti-slipping surface 321 includes a plurality of downwardly inclined teeth 322 which are disposed on a same plane in array arrangement. A top of the fixing piece 32 is formed as a rough surface 323, and the rough surface 323 includes a plurality of upwardly inclined teeth 324 which are on a same plane in array arrangement, distances between the upwardly inclined teeth 324 are larger than those between the downwardly inclined teeth 322.

The anti-slipping element 33 is a nut for screwing on the upright portion 313 of the fixing element 31. When it is embodied, the anti-slipping element 33 can also be a bolt, while the upright portion 313 of the fixing element 31 can be a nut, so that the anti-slipping element 33 can still be screwed together with the fixing element 31. After the anti-slipping element 33 is screwed together with the upright portion 313 of the fixing element 31, the anti-slipping element 33 is disposed above the fixing piece 32. Furthermore, a bottom surface of the anti-slipping element 33 is formed a rough surface 331, the rough surface 331 includes a plurality of inclined teeth 332 which are on a same plane, distances between the inclined teeth 332 are equal to those between the upwardly inclined teeth 324 of the fixing piece 32, so that the anti-slipping element 33 and the fixing piece 32 can be engaged with each other.

The plastic insulating board 5 is roughly shaped as a strip, it includes a wide portion 51, a narrow portion 52 extended from one end of the wide portion 51, and a plurality of through holes disposed on the plastic insulating board 5.

The anode tab 6 is a rectangular metal plate which is disposed below the narrow portion 52 of the plastic insulating board 5, and a circumference edge of the anode tab 6 is welded to a bottom of the cover plate 23, so that the narrow portion 52 of the plastic insulating board 5 is interposed between the cover plate 23 and the anode tab 6.

The cathode tab 7 is a metal plate shaped roughly as a strip, one end of the cathode tab 7 is disposed below the wide portion 51 of the plastic insulating board 5, while a coupling portion 71 is formed from another end by extending downward and bent toward the anode tab 6, the coupling portion 71 is coated with an insulating film, and the insulating film is the insulating element 8.When it is embodied, the insulating element 8 can also be an insulating board disposed between the coupling portion 71 of the cathode tab 7 and the anode tab 6; so as to prevent short circuit because of contact between the anode tab 6 and the cathode tab 7.

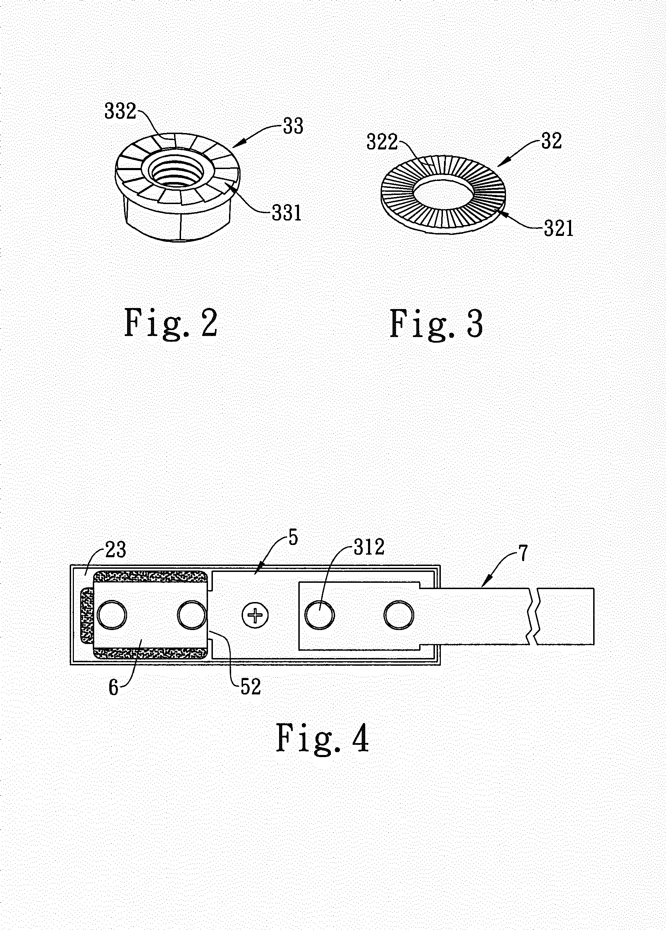

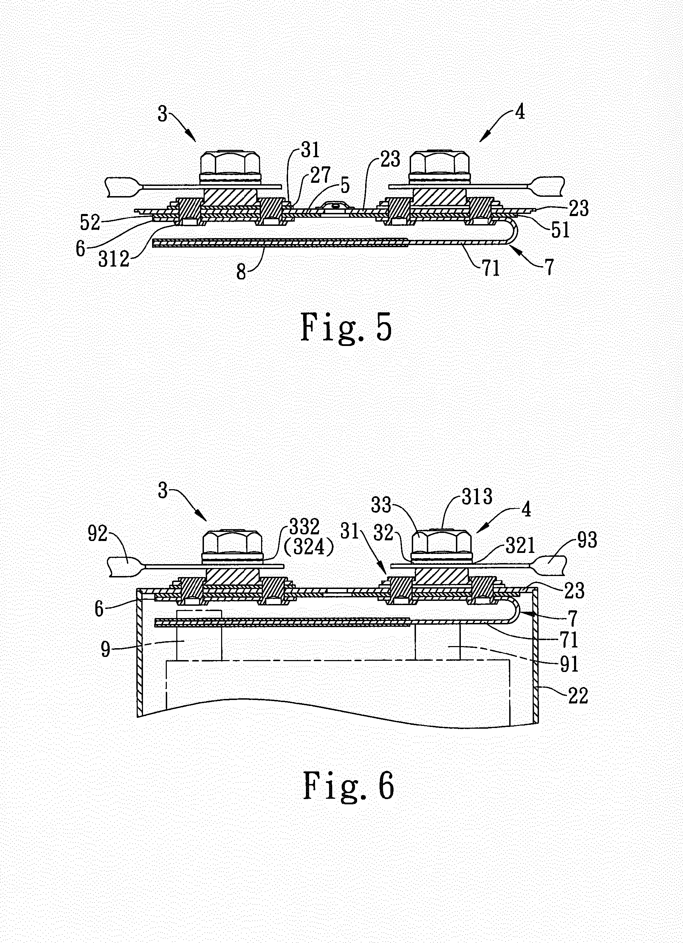

Accordingly, as shown in Figs. 4 and 5, after the positioning element 312 has gone through the plastic jacket 27, the cover plate 23 and the narrow portion 52 of the plastic insulating board 5; by riveting with a riveting machine, the fixing element 31, the plastic jacket 27, the cover plate 23, the narrow portion 52 of the plastic insulating board 5, and the anode tab 6 can be tightly coupled together. When it is embodied, the positioning element 312 can also be a bolt, and by using a corresponding nut, the fixing element 31, the plastic jacket 27, the cover plate 23, the narrow portion 52 of the plastic insulating board 5, and the anode tab 6 can be tightly coupled together. The same can be done for the second terminal component 4, the fixing element 31, the plastic jacket 27, the cover plate 23, the wide portion 51 of the plastic insulating board 5, and the cathode tab 7 can be tightly coupled together. At this moment, the cathode tab 7 is shaped as a straight strip as shown in Fig. 4. By the above combinations, the anode tab 6 is electrically connected to the cover plate 23 and the first terminal component 3, while the cathode tab 7 is electrically connected to the second terminal component 4.

Referring to Figs. 5 and 6, after a winding cored anode tab 9 is welded on the bottom shell body 22, and a winding cored cathode tab 91 is welded to the coupling portion 71 of the cathode tab 7 disposed below the cover plate 23; then the cathode tab 7 is bent in a flat U-shape, or the coupling portion 71 is bent and extended below the anode tab 6; so that the anode plate, separator and cathode plate are placed inside the bottom shell body 22, then the bottom shell body 22 can be sealed off by placing the cover plate 23 on top.

Referring to Fig. 6, when a anode terminal 92 and a cathode terminal 93 are respectively connected to the upright portions 313 of the fixing elements 31 of the first terminal component 3 and the second terminal component 4, so that they are respectively interposed between the fixing pieces 32 and the bottom portions 311 of the fixing elements 31; the bottom anti-slipping surfaces 321 of the fixing pieces 32 are embedded into upper surfaces of the anode terminal 92 and the cathode terminal 93, so that the anode terminal 92 and the cathode terminal 93 are pressed tightly to be prevented from getting loose; the inclined teeth 332 on the bottom surfaces of the anti-slipping elements 33 and the upwardly inclined teeth 324 on the tops of the fixing pieces 32 are corresponding with each other, therefore when the bottom surfaces of the anti-slipping elements 33 and the tops of the fixing pieces 32 are in contact, the anti-slipping elements 33 can be prevented from turning and getting loose because of vibration.

Therefore, the present invention has the following advantages:

1. The cathode tab of the of the present invention can be extended below the anode tab, and the length of the cathode tab can be adjusted according to different specifications of winding cores; therefore, it is applicable for shell bodies with large and small specifications and for various types of winding cores; so that processing can be speed up and manpower cost can be saved effectively.

2. The present invention allows the anode tab and the cathode tab to be electrically connected to the terminals, with large contact areas; so that not only the voltage and current for electric conduction can be stabilized for loading with large current, but heat can also be dissipated effectively, thus the products are more durable and can be used for a longer period.

3. The present invention employs the anti-slipping surfaces with teeth structure to be embedded into upper surfaces of the terminals; and the bottom surfaces of the anti-slipping elements and the tops of the fixing pieces have corresponding inclined teeth; therefore, the terminals are not only fixed effectively, but they are also prevented from getting loose because of vibration in order to ensure safety.

4. The fixing elements, the cover plate and the plastic jackets of the shell body, and the terminal plates of the present invention, are tightly coupled together by riveting; therefore, the electrolyte solution can be effectively prevented from leakage in practical use.

In conclusion, according to the disclosed description mentioned above, the present invention can achieve the objects by providing a lithium battery core and shell structure, so that electrolyte solution leakage can be effectively prevented and terminals can be fixed properly to ensure safety; besides, it can also save processing costs effectively and therefore can provide both practical and commercial values.

Although the embodiments of the present invention have been described in detail, many modifications and variations may be made by those skilled in the art from the teachings disclosed hereinabove. Therefore, it should be understood that any modification and variation equivalent to the spirit of the present invention be regarded to fall into the scope defined by the appended claims.

## Claims

1. A lithium battery core and shell structure, comprising:
a shell body, including a bottom shell body with an opening disposed at a top end, and a cover plate covering the top end of the bottom shell body in order to seal off the opening;
a first terminal component and a second terminal component, respectively connected above the cover plate of the shell body;
an anode tab, coupled below the cover plate of the shell body and electrically connected to the first terminal component;
a cathode tab, electrically connected to the second terminal component, and an end of the cathode tab is connected below the cover plate of the shell body, while another end of the cathode tab is extended downward and bent to form a coupling portion; and
an insulating element, disposed between the coupling portion of the cathode tab and the anode tab.

2. The lithium battery core and shell structure as claimed in Claim 1, wherein both the first and the second terminal components respectively comprising:
a fixing element, including a bottom portion and an upright portion extended upward from the bottom portion, through at least one positioning element gone through the cover plate, the bottom portion is connected to a terminal plate of either the anode tab or the cathode tab;
a fixing piece, sleeved on the upright portion, where an anti-slipping surface is disposed on a bottom of the fixing piece; and
an anti-slipping element, connected to the upright portion and disposed above the fixing piece, where at least one of a bottom surface of the anti-slipping element and a top surface of the fixing piece is formed as a rough surface.

3. The lithium battery core and shell structure as claimed in Claim 2, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, and distances between the upwardly inclined teeth are larger than those between the downwardly inclined teeth.

4. The lithium battery core and shell structure as claimed in Claim 2, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, distances between the upwardly inclined teeth are larger than those between the downwardly inclined teeth, the bottom surface of the anti-slipping element is formed as a rough surface, the rough surface includes a plurality of inclined teeth being on a same plane, distances between the inclined teeth are equal to those between the upwardly inclined teeth.

5. The lithium battery core and shell structure as claimed in Claim 1, wherein the coupling portion of the cathode tab is extended below the anode tab.

6. The lithium battery core and shell structure as claimed in Claim 1, wherein a plastic insulating board is disposed between the cover plate of the shell body and the anode and cathode tabs.

7. The lithium battery core and shell structure as claimed in Claim 6, wherein both the first and the second terminal components respectively comprising:
a fixing element, including a bottom portion and an upright portion extended upward from the bottom portion, through at least one positioning element gone through the cover plate, the bottom portion is connected to a terminal plate of either the anode tab or the cathode tab;
a fixing piece, sleeved on the upright portion, where an anti-slipping surface is disposed on a bottom of the fixing piece; and
an anti-slipping element, connected to the upright portion and disposed above the fixing piece, where at least one of a bottom surface of the anti-slipping element and a top surface of the fixing piece is formed as a rough surface.

8. The lithium battery core and shell structure as claimed in Claim 7, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, and distances between the upwardly inclined teeth are larger than those between the downwardly inclined teeth.

9. The lithium battery core and shell structure as claimed in Claim 7, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, distances between the upwardly inclined teeth are larger than those between the downwardly inclined teeth, the bottom surface of the anti-slipping element is formed as a rough surface, the rough surface includes a plurality of inclined teeth being on a same plane, distances between the inclined teeth are equal to those between the upwardly inclined teeth.

10. The lithium battery core and shell structure as claimed in Claim 6, wherein the coupling portion of the cathode tab is extended below the anode tab.

11. The lithium battery core and shell structure as claimed in Claim 6, wherein the plastic insulating board is shaped as a strip, it includes a wide portion and a narrow portion, the wide portion is interposed between the cover plate and the cathode tab, the narrow portion is interposed between the cover plate and the anode tab, and a circumference edge of the anode tab is coupled to the cover plate.

12. The lithium battery core and shell structure as claimed in Claim 11, wherein the coupling portion of the cathode tab is extended below the anode tab.

13. The lithium battery core and shell structure as claimed in Claim 11, wherein both the first and the second terminal components respectively comprising:
a fixing element, including a bottom portion and an upright portion extended upward from the bottom portion, through at least one positioning element gone through the cover plate, the bottom portion is connected to a terminal plate of either the anode tab or the cathode tab;
a fixing piece, sleeved on the upright portion, where an anti-slipping surface is disposed on a bottom of the fixing piece; and
an anti-slipping element, connected to the upright portion and disposed above the fixing piece, where at least one of a bottom surface of the anti-slipping element and a top surface of the fixing piece is formed as a rough surface.

14. The lithium battery core and shell structure as claimed in Claim 13, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, and distances between the upwardly inclined teeth are larger than those between the downwardly inclined teeth.

15. The lithium battery core and shell structure as claimed in Claim 13, wherein the anti-slipping surface on the bottom of the fixing piece includes a plurality of downwardly inclined teeth being on a same plane, the top of the fixing piece is formed as a rough surface, and the rough surface includes a plurality of upwardly inclined teeth being on a same plane, distances between the upwardly inclined teeth are larger than those between the downwardly inclined teeth, the bottom surface of the anti-slipping element is formed as a rough surface, the rough surface includes a plurality of inclined teeth being on a same plane, distances between the inclined teeth are equal to those between the upwardly inclined teeth.
